# EUROPÄISCHE PATENTSCHRIFT

(11) **EP 1 193 119 B1**
(45) Veröffentlichungstag und Bekanntmachung des Hinweises auf die Patenterteilung: **07.06.2006**
(21) Anmeldenummer: 01122708.9
(22) Anmeldetag: 21.09.2001
(51) Int. Cl.: B60N 2/68

(54) **Rahmenstruktur, insbesondere Lehnenrahmen für einen Fahrzeugstuhl, umfassend wenigstens zwei Seitenholme und einen diese verbindenden oberen Querträger, jeweils aus Hohlprofilen**
Frame, particularly backrest frame for a vehicle seat, providing at least two lateral beams and a transversal connecting beam, all realised with hollow profiles
Cadre, en particulier cadre de dossier pour un siège de véhicule, comprenant au moins deux montants latéraux et une traverse les reliant, réalisés en profilés creux

(30) Priorität: 27.09.2000 DE 10047770
(43) Veröffentlichungstag der Anmeldung: 03.04.2002
(73) Patentinhaber: Bayerische Motoren Werke Aktiengesellschaft, 80809 München (DE)
(72) Erfinder: Lein, Rudolf, 80939 Muenchen (DE); Schober, Thomas, 80995 Muenchen (DE)

(56) Entgegenhaltungen:
- EP-A- 0 689 957
- EP-A- 0 709 250
- DE-U- 9 416 771
- FR-A- 2 677 935
- FR-A- 2 753 935
- FR-A- 2 786 743
- GB-A- 2 319 487
- US-A- 5 333 775

## Beschreibung

Lehnenrahmen herkömmlicher Fahrzeugstühle bestehen zum Beispiel aus einem Rohrrahmen aus einem gebogenen Rohrprofil gleichbleibenden Querschnittes. An den unteren Enden der beiden Seitenholme sind Beschläge für die Montage des Lehnenrahmens am Sitzteil des Fahrzeugstuhles vorgesehen. Der obere Querträger des Lehnenrahmens weist zwei in Breitenrichtung des Lehnenrahmens beabstandete Durchgangsöffnungen zur Aufnahme von zwei Kopfstützenstreben auf. Der Rohrrahmen ist in ein Lehnenpolster eingebettet, welches den erforderlichen Sitzkomfort bereitstellt.

Ein Nachteil derartiger herkömmlicher Lehnenrahmen ist, daß diese die Belastungen aufnehmenden Elemente aus einem gebogenen Rohrprofil gebildet sind, das eine gleichbleibende Querschnittsform hat. Dieses ist an das größte zu erwartende, auf den Lehnenrahmen aufgebrachte Biegemoment angepaßt, welches im allgemeinen im unteren Bereich der beiden Seitenholme auftritt. Das bedeutet, daß der Lehnenrahmen in allen anderen Bereichen hinsichtlich des aufzunehmenden Biegemomentes überdimensioniert ist, so daß die Werkstoffausnutzung mit zunehmender Lehnenhöhe immer schlechter wird. Dieses ist sowohl hinsichtlich der Materialkosten als auch hinsichtlich des Gewichtes des Lehnenrahmens ungünstig.

Ein weiterer Nachteil wird darin gesehen, daß Adaptionsmöglichkeiten zum Anbau weiterer Strukturelemente durch zusätzliche Arbeitsschritte und gegebenenfalls mit zusätzlichen Anbauteilen geschaffen werden müssen (z.B. Anbringen von Bohrungen für Kopfstützenführungen, Schaffung von Anlageflächen für den Anbau von Motoren usw.).

Durch die DE 198 27 563 A1 ist bereits eine Rückenlehne für einen Fahrzeugstuhl bekannt, bei der der die Belastung aufnehmende Teil der Lehne aus einer ersten, in das Lehnenpolster eingebetteten Schale sowie einer mit dieser ersten Schale verbundenen zweiten Schale besteht, wobei die Randbereiche der ersten und zweiten Schale zumindest abschnittsweise so gestaltet sind, daß sie zusammen wenigstens ein Hohlprofil bilden. Durch diese Ausgestaltung soll die Aufgabe gelöst werden, die Herstellungskosten und das Gewicht der Rückenlehne zu senken. Die Gewichtsersparnis wird hierbei insbesondere durch die Schalenbauweise allgemein erzielt, wobei jedoch die Frage der unterschiedlichen Materialausnutzung im oberen Bereich der Rückenlehne einerseits und im unteren Bereich andererseits nicht berücksichtigt ist. Es hat sich außerdem gezeigt, daß der Zusammenbau der ersten und zweiten Schale einen verhältnismäßig großen Montageaufwand erfordert, so daß diese Konstruktion auch im Hinblick auf die Montagekosten nicht optimal ist.

Aus der gattungsbildenden DE 94 16 771 U1 ist ein Rahmen für einen Fahrzeugsitz bekannt, der im IHU-Verfahren (d. h Innenhochdruckumformen - Verfahren, s. dazu z.B. die Beschreibung im Industrieanzeiger Nr. 20 vom 9.3.1984 oder auch in "Metallumformtechnik", Ausgabe 1D/91. Seite 15 ff: A. Ebbingshaus : "Präzisionswerkstücke in Leichtbauweise, hergestellt durch Innendruckumformen") hergestellt ist, mit einem Faserverlauf des metallischen Werkstoffs, der im Wesentlichen parallel zur Oberfläche der Rahmenbauteile verläuft. Durch die größere Variation der Querschnittsgestaltung im IHU-Verfahren ist es möglich, Vertiefungen für Seitenairbag-Einrichtungen direkt in die Lehnenbauteile des Sitzes einzuformen.

Eine weitere, ebenfalls gattungsbildende Rahmenstruktur ist z.B. aus der FR-A-2 753 935 bekannt.

Es ist die Aufgabe der vorliegenden Erfindung, eine Rahmenstruktur der im Oberbegriff des Anspruches 1 genannten Art zu schaffen, bei der mit einfachen Mitteln eine sehr gute Materialausnutzung gegeben ist, und die montagetechnisch günstig ist.

Diese Aufgabe ist erfindungsgemäß durch die kennzeichnenden Merkmale des Anspruchs 1 gelöst.

Weitere Merkmale der Erfindung sind in den abhängigen Ansprüchen angegeben.

Das IHU-Verfahren bietet vor allem für eine Massenfertigung gute Möglichkeiten, Träger gleicher Biegespannung herzustellen, indem Querschnittsprofil und Wandstärke dieses Trägers in Längsrichtung desselben an die zu erwartenden Biegespannungen angepaßt werden. Da das Problem einer schlechten Materialausnutzung vor allem bei den Seitenholmen auftritt, werden vor allem diese als Träger gleicher Biegespannung ausgebildet. Der obere Querträger ist in dieser Hinsicht weniger kritisch, so daß dieser auch einen über seine Länge gleichbleibenden Querschnitt haben kann.

In einer Ausgestaltung der Erfindung ist der obere Querträger mit den Seitenholmen einstückig ausgebildet. Er kann jedoch in einer anderen Ausgestaltung der Erfindung auch als von den Seitenholmen getrenntes Teil hergestellt und an diese montiert sein.

Da, wie weiter vorne dargelegt, der obere Querträger hinsichtlich eines über seine Längenausdehnung veränderlichen Biegemomentes weniger kritisch ist, kann er im allgemeinen ein über seine Länge gleichbleibendes Querschnittsprofil haben. In einer anderen Ausgestaltung der Erfindung kann jedoch auch der obere Querträger nach dem IHU-Verfahren im Sinne einer über seine Länge annähernd gleichen Biegespannung ausgebildet sein.

Ein wesentlicher Vorteil des IHU-Verfahrens im Zusammenhang mit der vorliegenden Erfindung wird darin gesehen, daß dieses die Möglichkeit bietet, Adaptionsmöglichkeiten für den Anbau weiterer Bauelemente mit in die Form für das IHU-Verfahren integrierten Werkzeugen geschaffen werden können. Beispielsweise können Durchgangslöcher für die Aufnahme von Kopfstützenstreben durch in die Form einfahrbare Stanzwerkzeuge geschaffen werden, wie allgemein bekannt ist. Anbauflächen zum Anbringen von Bauteilen können durch eine entsprechende Gestaltung der Formen für das IHU-Verfahren geschaffen werden, wie ebenfalls bekannt ist. Das zu verformende Bauteil läßt sich deshalb im allgemeinen mit einem einzigen integrierten Arbeitsgang herstellen, wie anhand eines Ausführungsbeispiels noch näher erläutert wird.

Für verstellbare Rückenlehnen ist gemäß einer Ausgestaltung der Erfindung vorgesehen, daß die Seitenholme an ihrem unteren Ende ein wenigstens eine äußere Montagefläche für den Anbau eines Lehnenverstellantriebes bildendes Querschnittsprofil haben. Diese Montagefläche wird bei der IHU-Verformung durch eine entsprechende Innenfläche beim Formwerkzeug gebildet.

In einer bevorzugten Ausgestaltung der vorliegenden Erfindung ist vorgesehen, daß die Seitenholme in ihrem in Längsrichtung mittleren Bereich ein an die menschliche Rückenkontur angepaßtes Querschnittsprofil mit einer zu einer vertikalen Symmetrieebene des Lehnenrahmens schräg stehenden Stützfläche haben. Auf diese Weise läßt sich mit geringem Konstruktions- und Fertigungsaufwand eine gute Abstützung und Seitenführung für den Benutzer des Fahrzeugstuhles erreichen.

Falls der Lehnenrahmen aus zwei Seitenholmen und einem getrennt hergestellten oberen Querträger zusammengebaut wird, ist in weiterer Ausgestaltung der Erfindung vorgesehen, daß die Seitenholme an ihrem oberen Ende ein für den Zusammenbau mit dem oberen Querträger angepaßtes Querschnittsprofil haben, und daß der obere Querträger seinerseits an seinen beiden Enden je ein für den Zusammenbau mit einem der beiden Seitenholme angepaßtes Querschnittsprofil hat.

Bei einer Konstruktion, bei der der Lehnenrahmen auf am Sitzteil des Stuhls angeordnete Lehnenschwerter aufgesteckt wird, ist in einer weiteren Ausgestaltung der Erfindung vorgesehen, daß die Seitenholme in ihrem unteren Endbereich jeweils einen Einsatz mit einer an die Innenkontur des Seitenholmes angepaßten Außenkontur und mit einer zur formschlüssigen Aufnahme des Lehnenschwertes ausgebildeten Innenkontur aufnehmen.

Ein Verfahren zur Herstellung einer Rahmenstruktur nach einem der Ansprüche 1 bis 5 sieht folgende Verfahrensschritte vor:
ein Rohling für jedes nach dem IHU-Verfahren zu verformende Teil wird bereitgestellt;
der Rohling wird in eine den Außenkonturen des Teils entsprechende Form eingelegt und durch Aufbringen eines Innendruckes verformt;
durch mit der Form integrierte Stanzwerkzeuge werden die Öffnungen zur Aufnahme von Montageelementen in die Teile gestanzt.

Durch das beschriebene Verfahren können die Komponenten der Rahmenstruktur, wie beispielsweise Seitenholm oder oberer Querträger, durch in das Formwerkzeug integrierte Bearbeitungswerkzeuge in einem Werkzeugkomplex fertig bearbeitet werden.

In einer weiteren Ausgestaltung des Verfahrens ist vorgesehen, daß als Rohlinge Strangziehprofile mit an die Endform der Teile angepaßter, über die Länge der Teile veränderlicher Querschnittsformen und Wandstärke verwendet werden. Auf diese Weise kann sichergestellt werden, daß nach dem IHU-Verfahren die durch den Materialstreckvorgang veränderten Wandstärken des fertigen Teils die gewünschten Werte aufweisen, die die Bedingung des Trägers gleicher Biegespannung erfüllen.

Mehrere Ausführungsbeispiele der Erfindung sind in der Zeichnung dargestellt und im folgenden näher beschrieben. Es zeigen:
- Fig. 1: schematisch in einer Seitenansicht den Verlauf des Biegemomentes und der Biegespannung bei einem herkömmlichen Lehnenrahmen;
- Fig. 2: in einer Darstellung ähnlich der Fig. 1 den Verlauf des Biegemomentes und der Biegespannung bei einem erfindungsgemäßen Lehnenrahmen;
- Fig. 3: einen Lehnenrahmen in einer Seitenansicht;
- Fig. 4: einen Lehnenrahmen gemäß der Fig. 3 in einer Vorderansicht;
- Fig. 5: zwei Schnitte durch einen Lehnenrahmen gemäß den Fig. 3 und 4 entlang den Schnittlinien A-A und B-B;
- Fig. 6: eine Einzelheit eines Lehnenrahmens im Verbindungsbereich zwischen Seitenholm und oberem Querträger;
- Fig. 7: schematisch eine Einzelheit zur Befestigung eines Seitenholms am Sitzteil eines Fahrzeugstuhls.

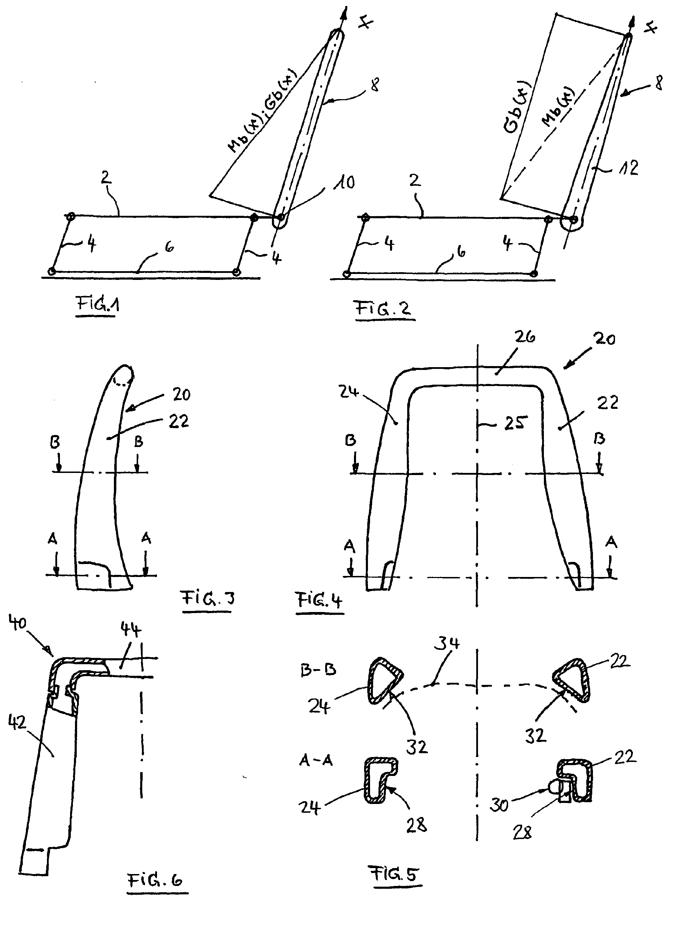

Der in Fig. 1 schematisch dargestellte Fahrzeugstuhl besteht in an sich bekannter Weise aus einem Sitzrahmen 2 (eine Polsterung wurde fortgelassen), der über Parallel-Lenker 4 höhenverstellbar an einer Basisstruktur 6 angelenkt ist. Die aus dem Sitzrahmen 2, den Parallel-Lenkem 4 und der Sitzschiene 6 bestehende Einheit ist, wie nicht im einzelnen dargestellt wurde, nach vorne und hinten verstellbar auf dem Fahrzeugboden gelagert. Eine über den hinteren Parallel-Lenker 4 hinausgehende Verlängerung des Sitzrahmens 2 trägt eine Rückenlehne 8, die in ebenfalls nicht näher dargestellter Weise um eine Schwenkachse 10 nach vorne oder hinten geneigt und in jeder Stellung arretiert werden kann.

Fig. 1 läßt in sehr vereinfachter Weise den Verlauf des auf die Rückenlehne 8 wirkenden Biegemomentes M_{b}(x) sowie der auf die Seitenholme wirkenden Biegespannung σ_{b}(x) erkennen. Da die Hauptkräfte im normalen Betrieb und auch im Crashfall im oberen Bereich der Sitzlehne 8 angreifen, ist das Biegemoment M_{b}(x) am unteren Ende des Lehnenrahmens am größten und nimmt nach oben zu linear ab. Bei herkömmlichen Lehnenrahmen mit Seitenholmen, deren Querschnitt über die Lehnenhöhe unveränderlich ist, ist auch die Biegespannung σ_{b}(x) im unteren Bereich des Lehnenrahmens am größten und nimmt ebenfalls nach oben zu linear ab, woraus folgt, daß die Materialausnutzung im oberen Teil des Lehnenrahmens schlecht ist.

Fig. 2 zeigt eine Ansicht ähnlich der Fig. 1, wobei gleiche Teile mit gleichen Bezugszeichen versehen sind. Wie die Fig. 2 erkennen läßt, sind die Seitenholme, von denen in Fig. 2 nur ein dem Betrachter zugewandter Seitenholm 12 sichtbar ist, nach oben zu verjüngt. Gemäß der Erfindung verändern sich die Querschnittsform und/oder die Wandstärke des Seitenholms 12 so, daß die Biegespannung σ_{b}(x) über die Höhe der Rückenlehne im wesentlichen konstant bleibt, so daß eine optimale Materialausnutzung gegeben ist. Die Formgebung der Seitenholme (und gegebenenfalls auch des oberen Querträgers) erfolgt durch das sogenannte IHU-Verfahren, welches es in relativ einfacher Weise erlaubt, die Querschnittsform und die Wandstärke des Seitenholmes über die Höhe der Rückenlehne innerhalb der Werkstoffgrenzen mit großer Gestaltungsfreiheit zu fertigen.

Fig. 3 zeigt eine Rückenlehne 20 in einer Seitenansicht, wobei wiederum nur der dem Betrachter zugewandte Seitenholm 22 zu sehen ist. Der Seitenholm 22 ist von unten nach oben verjüngt und hinsichtlich seiner Wandstärke so gestaltet, daß er die Bedingung einer im wesentlichen gleichbleibenden Biegespannung über die Lehnenhöhe erfüllt.

Fig. 4 zeigt die Rückenlehne 20 der Fig. 3 in einer Ansicht von vorn; sie besteht im wesentlichen aus den beiden Seitenholmen 22, 24 sowie dem diese verbindenden oberen Querträger 26. Die Seitenholme 22, 24 und der obere Querträger 26 sind im dargestellten Ausführungsbeispiel einstückig ausgebildet.

Fig. 5 zeigt zwei Schnitte A-A und B-B gemäß den Fig. 3 und 4. Wie die Fig. 5 erkennen läßt, sind die Seitenholme in ihrem unteren Bereich (Schnitt A-A) so profiliert, daß sie jeweils eine Anbaufläche 28 für den Anbau eines Verstellmechanismus 30 bilden. Im Bereich des Schnittes B-B sind die Seitenholme so geformt, daß sie jeweils eine Anlagefläche 32 bilden, die der menschlichen Rückenkontur 34 angepaßt ist.

Fig. 6 zeigt eine andere Ausgestaltung einer Rückenlehne 40 im Bereich einer durch einen Seitenholm 42 und den oberen Querträger 44 gebildeten Ecke. Wie Fig. 6 erkennen läßt, sind der Seitenholm 42 und der obere Querträger 44 als getrennte Bauteile hergestellt und beispielsweise durch das IHU-Verfahren geformt. Dabei haben der Seitenholm 42 in seinem oberen Bereich und der obere Querträger 44 in seinem diesem zugeordneten Endbereich jeweils eine Querschnittsform, die eine Steckverbindung zwischen Seitenholm 42 und oberem Querträger 44 erlauben.

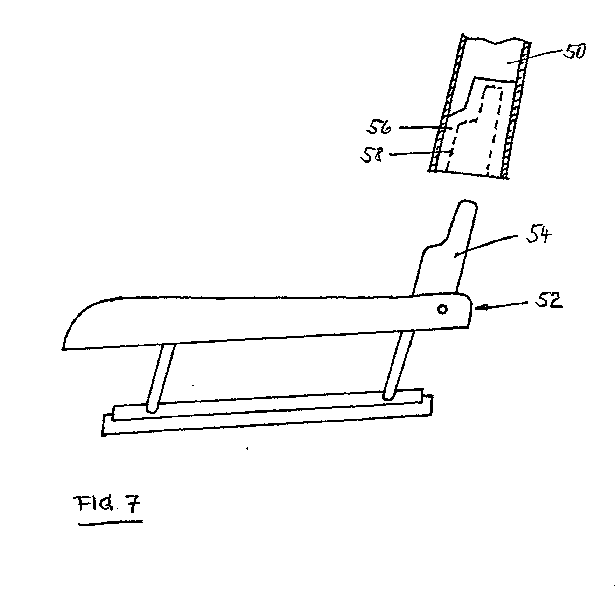

Fig. 7 zeigt ein Beispiel für den Anbau eines Seitenholms 50 an einen Sitzrahmen 52. Der Sitzrahmen 52 hat in seinem hinteren Bereich nach oben abstehende Lehnenschwerter, von denen wiederum nur ein dem Betrachter zugewandtes Lehnenschwert 54 zu sehen ist. Die Lehnenschwerter sind mit einem Verstellmechanismus verbunden, welcher ein Neigen dieser Lehnenschwerter nach vorne oder hinten sowie eine Arretierung derselben in jeder Stellung erlaubt. Die Seitenholme (von denen in Fig. 7 nur ein dem Betrachter zugewandter Seitenholm 50 zu sehen ist) sind an ihrem unteren Ende offen. In das untere Ende eines jeden Seitenholms ist ein Adapterteil 56 beispielweise aus einem Kunststoffmaterial eingepreßt, dessen Innenkontur 58 der Außenkontur des Lehnenschwertes 55 entspricht. Der Seitenholm 50 kann auf das Lehnenschwert 54 aufgesteckt und beispielsweise durch Schrauben mit diesem verbunden werden.

## Patentansprüche

1. Rahmenstruktur, insbesondere Lehnenrahmen für einen Fahrzeugstuhl, umfassend wenigstens zwei Seitenholme und einen diese verbindenden oberen Querträger aus Hohlprofilen, wobei
wenigstens die Seitenholme (22, 24) als nach dem IHU-Verfahren hergestellte Hohlprofile ausgebildet sind, **dadurch gekennzeichnet, dass** die Seitenholme (22, 24) bezogen auf die zu erwartende Belastung durch über der Länge der Hohlprofile veränderliche Querschnittsformen und/oder Wandstärken als Träger im wesentlichen gleicher Biegespannung ausgebildet sind.

2. Rahmenstruktur nach Anspruch 1,
**dadurch gekennzeichnet, dass** der obere Querträger (26) mit den Seitenholmen (22, 24) einstückig ausgebildet ist.

3. Rahmenstruktur nach Anspruch 1,
**dadurch gekennzeichnet, dass** der obere Querträger (44) als von den Seitenholmen (42) getrenntes Teil ausgebildet und an diese montiert ist.

4. Rahmenstruktur nach einem der Ansprüche 1 bis 3,
**dadurch gekennzeichnet, dass** der obere Querträger (26, 44, 62) nach dem IHU-Verfahren verformt ist.

5. Rahmenstruktur nach einem der Ansprüche 1 bis 4,
**dadurch gekennzeichnet, dass** die Seitenholme (22, 24) an ihrem unteren Ende ein wenigstens eine äußere Montagefläche für den Anbau eines Lehnenverstellantriebes (30) bildendes Querschnittsprofil haben.

6. Rahmenstruktur nach einem der Ansprüche 1 bis 5,
**dadurch gekennzeichnet, dass** die Seitenholme (22, 24) in ihrem in Längsrichtung mittleren Bereich eine an die menschliche Rückenkontur (34) angepasstes Querschnittsprofil mit einer zu einer vertikalen Symmetrieebene (25) des Lehnenrahmens (20) schräg stehenden Stützfläche (32) haben.

7. Rahmenstruktur nach einem der Ansprüche 1 und 3 bis 6,
**dadurch gekennzeichnet, dass** die Seitenholme (42) an ihrem oberen Ende ein für den Zusammenbau mit dem oberen Querträger (44) angepasstes Querschnittsprofil haben, und dass der obere Querträger (44) seinerseits an seinen beiden Enden je ein für den Zusammenbau mit einem der beiden Seitenholme (42) angepasstes Querschnittsprofil hat.

8. Rahmenstruktur nach einem der Ansprüche 1 bis 7,
**dadurch gekennzeichnet, dass** die Seitenholme (50) in ihrem unteren Endbereich jeweils einen Einsatz (56) mit einer an die Innenkontur des Seitenholms (50) angepassten Außenkontur und mit einer zur formschlüssigen Aufnahme eines am Sitzteil (52) des Stuhls angeordneten Lehnenschwertes (54) ausgebildeten Innenkontur aufnehmen.

9. Rahmenstruktur nach einem der Ansprüche 1 bis 8,
**dadurch gekennzeichnet, dass** die Seitenholme und der obere Querträger jeweils gestanzte Öffnungen zur Aufnahme von Montageelementen aufweisen.

## Claims

1. A frame structure, more especially a back-rest frame for a seat in a vehicle, comprising at least two hollow profile side members and a hollow profile top transverse bearer connecting them, wherein at least the side members (22, 24) are hollow profiles formed by the IHU method, **characterised in that** the side members (22, 24) are in the form of bearers under substantially equal bending stress, relative to the expected load, by being given cross-sectional shapes and/or wall thicknesses which vary along the length of the hollow profiles.

2. A frame structure according to claim 1, **characterised in that** the top transverse bearer (26) is integral with the side members (22, 24).

3. A frame structure according to claim 1, **characterised in that** the top transverse bearer (44) is a separate part mounted on the side members (42).

4. A frame structure according to any of claims 1 to 3, **characterised in that** the top transverse bearer (26, 44, 62) is formed by the IHU process.

5. A frame structure according to any of claims 1 to 4, **characterised in that** at their bottom end, the side members (22, 24) have a cross-sectional profile forming at least one outer surface for attaching a back-rest adjusting drive (30).

6. A frame structure according to any of claims 1 to 5, **characterised in that** the middle longitudinal region of the side members (22, 24) has a cross-sectional profile adapted to the contour (34) of the human back, with a supporting surface (32) at an angle to a vertical plane (25) of symmetry of the back-rest frame (20).

7. A frame structure according to any of claims 1 and 3 to 6, **characterised in that** at their top end the side members (42) have a cross-sectional profile suitable for fitting to the top transverse bearer (44), and the top transverse bearer (44) at each end has a cross-sectional profile adapted for fitting to one of the two side members (42).

8. A frame structure according to any of claims 1 to 7, **characterised in that** the bottom end region of each side member (50) has an insert (56) with an outer contour adapted to the inner contour of the side member (50) and an inner contour for positively receiving a back-rest tongue (54) disposed on the seat part (52) of the seat.

9. A frame structure according to any of claims 1 to 8, **characterised in that** the side members and the top transverse bearer each have punched openings for receiving assembly elements.

## Revendications

1. Cadre, en particulier cadre de dossier pour un siège de véhicule, comprenant au moins deux montants latéraux et une traverse supérieure les reliant, réalisés en profilés creux, au moins les montants latéraux (22, 24) ayant la forme de profilés creux fabriqués au moyen du procédé IHU (procédé de formage sous haute pression intérieure),
**caractérisé en ce qu'**
en fonction de la charge prévisible, les montants latéraux (22, 24) sont des supports ayant essentiellement la même contrainte en flexion par les formes en coupe transversale et/ou les épaisseurs variables des parois sur la longueur des profilés creux.

2. Cadre selon la revendication 1,
**caractérisé par**
la traverse supérieure (26) formée d'une seule pièce avec les montants latéraux (22, 24).

3. Cadre selon la revendication 1,
**caractérisé en ce que**
la traverse supérieure (44) est un élément séparé des montants latéraux (42) et est montée sur ceux-ci.

4. Cadre selon l'une des revendications 1 à 3,
**caractérisé en ce que**
la traverse supérieure (26, 44, 62) est déformée au moyen du procédé IHU.

5. Cadré selon l'une des revendications 1 à 4,
**caractérisé en ce que**
les montants latéraux (22, 24) ont, à leur extrémité inférieure, un profilé en coupe transversale formant au moins une surface extérieure pour le montage additionnel d'un entraînement de réglage de dossier (30).

6. Cadre selon l'une des revendications 1 à 5,
**caractérisé en ce que**
les montants latéraux (22, 24) ont, dans leur zone centrale et dans le sens de la longueur, un profilé en coupe transversale adapté au contour du dos (34) avec une surface d'appui (32) oblique par rapport à un plan de symétrie vertical (25) du cadre de dossier (20).

7. Cadre selon l'une des revendications 1 et 3 à 6,
**caractérisé en ce que**
les montants latéraux (42) ont, à leur extrémité supérieure, un profilé en coupe transversale adapté pour l'assemblage à la traverse supérieure (44) et la traverse supérieure (44) présente à chaque fois, à ses deux extrémités, un profilé en coupe transversale adapté pour l'assemblage à l'un des deux montants latéraux (42).

8. Cadre selon l'une des revendications 1 à 7,
**caractérisé en ce que**
les montants latéraux (50) reçoivent, dans chaque zone d'extrémité inférieure, un insert (56) présentant un contour extérieur adapté au contour intérieur du montant latéral (50) et un contour intérieur qui reçoit par complémentarité de forme une barre de dossier (54) disposée sur la partie (52) du siège.

9. Cadre selon l'une des revendications 1 à 8,
**caractérisé en ce que**
les montants latéraux et la traverse supérieure présentent des ouvertures poinçonnées pour recevoir des éléments de montage.
